# FASCICULE DE BREVET EUROPEEN

(11) **EP 3 016 798 B1**
(45) Date de publication et mention de la délivrance du brevet: **23.08.2017**
(21) Numéro de dépôt: 14736907.8
(22) Date de dépôt: 19.06.2014
(51) Int. Cl.: B29D 11/00, G02B 1/04

(54) **PROCEDÉ DE FABRICATION D'UNE LENTILLE OPHTALMIQUE PAR IMBIBITION D'UN DÉRIVÉ DE BENZOTRIAZOLE**
VERFAHREN ZUR HERSTELLUNG EINER OPHTHALMISCHEN LINSE DURCH IMPRÄGNIERUNG EINES BENZOTRIAZOLDERIVATS
PROCESS FOR MANUFACTURING AN OPHTHALMIC LENS BY IMPREGNATION OF A BENZOTRIAZOLE DERIVATIVE

(30) Priorité: 05.07.2013 FR 1356617
(43) Date de publication de la demande: 11.05.2016
(73) Titulaire: Essilor International (Compagnie Générale d'Optique), 94220 Charenton Le Pont (FR)
(72) Inventeur: HABASSI, Chafik, F-94220 Charenton le Pont (FR)
(74) Mandataire: Cabinet Plasseraud
(86) Numéro de dépôt international: PCT/FR2014/051518
(87) Numéro de publication internationale: WO 2015/001219

(56) Documents cités:
- WO-A1-2008/087741
- JP-A- 2000 266 905
- JP-A- 2006 098 564

## Description

### DOMAINE TECHNIQUE

La présente invention concerne un procédé de fabrication d'une lentille ophtalmique comprenant un substrat organique transparent absorbant les UV (ultra-violets), comprenant l'immersion du substrat organique dans un bain constitué d'une solution aqueuse renfermant un 2-(2-hydroxy-4-alkyloxyphenyl)-2H-benzotriazole, où le groupe alkyle est linéaire ou ramifié et renferme de 3 à 12 atomes de carbone.

### ARRIERE-PLAN DE L'INVENTION

Les rayons UV de longueur d'onde comprise entre 200 et 400 nm sont connus pour être nocifs pour l'oeil humain. Ils sont notamment responsables d'une accélération du vieillissement oculaire susceptible d'engendrer une cataracte précoce ou de phénomènes plus extrêmes comme la photokératite ou "cécité des neiges". Pour prévenir les dommages oculaires provoqués par ces rayons, on incorpore habituellement des absorbeurs UV dans les lentilles ophtalmiques. Ces absorbeurs UV peuvent être introduits dans un revêtement résistant à l'abrasion appliqué sur le substrat de la lentille (WO 2008/087741) ou plus généralement dans le substrat lui-même. Dans ce dernier cas, l'absorbeur UV peut être incorporé dans la masse de la lentille, lors de la polymérisation des monomères formant le matériau de la lentille, ou en surface de celle-ci, par immersion de la lentille (ou imbibition) dans un bain contenant l'absorbeur UV.

L'incorporation d'un absorbeur UV dans la lentille s'accompagne généralement d'un jaunissement indésirable de celle-ci, auquel on peut remédier en associant l'absorbeur UV à un colorant spécifique.

La demande EP 1 085 348 divulgue un procédé d'incorporation d'un absorbeur UV dans une lentille sans entraîner de jaunissement de cette dernière. Ce procédé consiste à mélanger un absorbeur UV à base de benzotriazole, avec un monomère de type épisulfure ou diéthylèneglycol bis(allyl carbonate) qui est ensuite polymérisé pour former le matériau de la lentille. L'utilisation de cet absorbeur UV spécifique dans ce procédé particulier permet une absorption des UV longs.

En outre, il a été suggéré dans la demande JP01-230003 un procédé d'imbibition d'une lentille à l'aide d'un autre dérivé de benzotriazole, le 2-(2-hydroxy-5-méthylphényl) benzotriazole.

Il subsiste néanmoins le besoin de disposer d'un procédé simple et efficace pour obtenir une lentille présentant simultanément une coupure UV supérieure ou égale à 365 nm et un indice de jaune YI inférieur ou égal à 1,5.

La Demanderesse a démontré que ce besoin pouvait être satisfait en incorporant un 2-(2-hydroxy-4-alkyloxyphényl)benzotriazole, par imbibition, dans une lentille ophtalmique.

Il a déjà été suggéré dans la demande JP2006-098564 d'utiliser un composé de ce type comme additif dans un liquide colorant destiné à la fabrication d'une lentille très colorée et diffusante pour écran à transmission. En revanche, à la connaissance de la Demanderesse, il n'a encore jamais été suggéré que ce composé pouvait permettre la fabrication d'une lentille ophtalmique, par nature peu colorée et non diffusante, présentant les propriétés précitées.

JP2000 266905 A décrit un procédé de préparation de lentilles ophtalmiques colorées.

### RESUME DE L'INVENTION

La présente invention a par conséquent pour objet un procédé de fabrication d'une lentille ophtalmique comprenant un substrat organique transparent absorbant les UV, comprenant l'immersion du substrat organique dans un bain constitué d'une solution aqueuse renfermant un 2-(2-hydroxy-4-alkyloxyphenyl)-2H-benzotriazole, où le groupe alkyle est linéaire ou ramifié et renferme de 3 à 12 atomes de carbone.

L'invention a également pour objet l'utilisation d'un bain, constitué d'une solution aqueuse renfermant une quantité efficace de 2-(2-hydroxy-4-alkyloxyphenyl)-2H-benzotriazole, où le groupe alkyle est linéaire ou ramifié et renferme de 3 à 12 atomes de carbone, pour conférer à une lentille ophtalmique une coupure UV supérieure ou égale à 365 nm et un indice de jaune YI inférieur ou égal à 1,5 et de préférence inférieur à 1 voire inférieur à 0,8.

### DESCRIPTION DETAILLEE

Le procédé selon l'invention comprend l'imbibition d'un substrat organique transparent à l'aide d'un absorbeur UV spécifique. Par "transparent", on entend un substrat qui transmet la lumière sans la diffuser.

Ce substrat organique peut être n'importe quel substrat organique afocal ou correcteur couramment utilisé dans le domaine optique et en particulier ophtalmique. On peut citer à titre d'exemples les substrats en polycarbonate, en polyamide, en polyimide, en polysulfone, en copolymères de poly(éthylène téréphtalate) et de polycarbonate, en polyoléfines, notamment en polynorbornène, en homopolymères et copolymères d'allylcarbonates de polyols, notamment de diéthylèneglycol bis(allylcarbonate), en polymères et copolymères de (méth)acrylates d'alkyle ou de (méth)acrylates aromatiques polyéthoxylés, notamment dérivés de bisphénol A, en polymères et copolymères thio(méth)acryliques, en poly(thio)uréthane, en polymères et copolymères époxy et en polymères et copolymères d'épisulfure. On préfère selon l'invention utiliser un substrat ayant un indice de réfraction inférieur à 1,6, qui présente généralement une coupure UV inférieure à 360 nm, tel qu'un substrat constitué d'un homopolymère ou d'un copolymère de diéthylèneglycol bis(allylcarbonate).

Ce substrat est imprégné d'absorbeur UV par immersion du substrat organique dans un bain constitué d'une solution aqueuse de l'absorbeur UV. Ce dernier est choisi parmi les 2-(2-hydroxy-4-alkyloxyphenyl)-2H-benzotriazoles, dans lesquels le groupe alkyle est linéaire ou ramifié et renferme de 3 à 12 atomes de carbone, de préférence de 6 à 10 atomes de carbone. Il s'agit avantageusement d'un groupe octyle. L'absorbeur UV peut être présent dans le bain en une concentration comprise entre 0,1 et 5 % en poids, et de préférence comprise entre 0,5 et 1% en poids, par rapport au poids total du bain. Ce bain peut en outre contenir au moins un additif choisi dans le groupe constitué par : un agent dispersant, tel que l'acide dodécylbenzène sulfonique ou ses sels ou un ester d'acide gras éthoxylé ; un colorant tels que ceux commercialisés par HUNTSMAN sous les dénominations commerciales Teratop Blue NFB et Teratop Red NFR ; un pigment ; et leurs mélanges. La durée d'immersion de la lentille dans le bain peut être comprise entre 30 minutes et 3h, et la température du bain est avantageusement comprise entre 80°C et 99°C, de préférence entre 90 et 96°C.

Après imbibition, la lentille ophtalmique peut être rincée à l'eau ou à l'aide d'un alcool inférieur tel que l'éthanol ou l'isopropanol.

Elle peut ensuite être revêtue de différents revêtements et en particulier de l'empilement d'un ou plusieurs revêtements choisis parmi : un revêtement anti-abrasion, un revêtement anti-reflets, un revêtement anti-salissure, un revêtement antistatique, un revêtement anti-buée, un revêtement polarisant, un revêtement teinté et un revêtement photochromique.

La lentille comprend généralement au moins un revêtement anti-abrasion disposé sur le substrat soit directement, soit après interposition d'un revêtement de primaire anti-choc à base de latex. Ce revêtement anti-abrasion peut être formé à partir de (méth)acrylate d'alkyle, mais il est de préférence formé par voie sol-gel à partir d'au moins un époxyalcoxysilane et éventuellement d'au moins un alcoxysilane, tel que décrit dans la demande EP 0 614 957, par exemple.

Le revêtement anti-abrasion peut en outre renfermer au moins un élément choisi parmi : un solvant, tel que le méthanol ; un catalyseur de condensation, tel qu'un composé renfermant plusieurs fonctions acide carboxylique ou anhydride carboxylique, de préférence l'acide itaconique ou en variante l'acide trimellitique ou l'anhydride trimellitique ; un catalyseur de durcissement, tel qu'un composé à base d'aluminium, en particulier l'acétylacétonate d'aluminium, le dicyandiamide ou leurs mélanges ; un tensioactif fluoré ou siliconé ; une charge inorganique, telle que la silice, sous forme de suspension colloïdale dans un solvant tel que l'eau et/ou un alcool ; un agent chélatant ; un absorbeur UV ; et leurs mélanges.

Le revêtement anti-abrasion peut être appliqué sur le substrat selon des procédés connus, par exemple par centrifugation (*spin coating*), par immersion (*dip coating*), par étalement (*bar coating*), ou par pulvérisation (*spray coating*), de préférence par centrifugation. De préférence, le dépôt est réalisé par immersion.

Après application sur le substrat, ce revêtement peut être durci par chauffage à l'étuve ou par infrarouge, typiquement à une température de 60°C à 200°C, par exemple de 80°C à 150°C, pendant une durée de 30 min à 3 heures.

Eventuellement, un revêtement anti-reflet peut ensuite être appliqué par-dessus le revêtement anti-abrasion, suivant les mêmes procédés d'enduction. Les revêtements anti-reflets sont bien connus et comprennent classiquement un empilement monocouche ou multicouche de matériaux diélectriques tels que SiO, SiO₂, Al₂O₃, MgF₂, LiF, Si₃N₄, TiO₂, ZrO₂, Nb₂O₅, Y₂O₃, HfO₂, Sc₂O₃, Ta₂O₅, Pr2O₃ et leurs mélanges. On préfère utiliser un empilement multicouche comprenant une alternance de couches diélectriques minérales de haut indice de réfraction (IR > 1,55) et de bas indice de réfraction (IR < 1,55), ces dernières comprenant avantageusement un mélange de SiO₂ et de Al₂O₃.

On obtient à l'issue de ce procédé une lentille ophtalmique qui est destinée à protéger l'oeil et/ou corriger la vue et s'adapte sur une monture de lunettes.

Cette lentille présente une coupure UV supérieure ou égale à 365 nm et un indice de jaune YI inférieur ou égal à 1,5 et de préférence inférieur à 1 voire inférieur à 0,8.

La coupure UV correspond à la longueur d'onde pour laquelle la transmission de la lumière est inférieure à 1%, pour un substrat de 2 mm d'épaisseur et sous incidence normale. Elle peut être mesurée à l'aide d'un spectrophotomètre.

Le pouvoir protecteur de la lentille vis-à-vis des UV peut en variante être exprimé par son taux de RUVa, qui correspond - conformément à la norme ISO 4007:2012 - à la valeur normalisée (en pourcentage) du facteur de transmission spectrale moyenné entre 315 et 380 nm, pondérée par la répartition de la puissance spectrale solaire, Es(λ), au niveau de la mer, pour une masse d'air de 2, et par l'efficacité lumineuse relative spectrale, S(λ), pour le rayonnement UV.

En outre, l'indice de jaune YI peut être mesuré conformément à la norme ASTM D1925.

### EXEMPLES

### Exemple 1 : Fabrication d'une lentille absorbant les UV

On a préparé un bain en ajoutant, dans 23 1 d'eau : 46 g de dodécylbenzènesulfonate de sodium ; 200 g de 2-(2-hydroxy-4-octyloxyphenyl)-2H-benzotriazole (Seesorb 707 de SHIPRO KASEI KAISHA) ; 4,6 g d'une dispersion de colorant blue (Teratop Blue NFB de HUNTSMAN) ; et 2,3 g d'une dispersion de colorant rouge (Teratop Red NFR de HUNTSMAN). Un substrat de lentille à base de polymère de diéthylène glycol bis(allylcarbonate), d'indice de réfraction 1.5 (Orma® d'ESSILOR), a été nettoyé à l'alcool isopropylique, puis immergé pendant 45 min dans ce bain porté à 94°C. Après immersion dans le bain, le substrat a été refroidi puis nettoyé en le plongeant pendant 5 minutes dans l'alcool isopropylique, afin d'éliminer tout dépôt résiduel en surface. Le substrat a ensuite été essuyé à l'aide d'un chiffon de type Suedine.

### Exemple 2 : Mesure de la coupure UV

La lentille obtenue à l'exemple 1 a été analysée à l'aide d'un spectrophotomètre (Cary50). On a tracé la courbe du pourcentage de transmission de la lentille en fonction de la longueur d'onde. On a ensuite relevé la longueur d'onde correspondant à 1% de transmission, qui constitue la coupure UV du matériau.

A titre de comparaison, on a également mesuré la coupure UV d'une lentille constituée du même substrat non traité par l'absorbeur UV, et d'une lentille imbibée de la même manière d'un absorbeur UV différent (UV 24 de CYTEC), qui est la 2,2'-dihydroxy-4-méthoxy-benzophénone.

Parallèlement, on a mesuré l'indice de jaune conformément à la norme ASTM D 1925.

Pour chacun des absorbeurs UV testés, la coupure UV et l'indice de jaune ont été mesurés sur une série de cinq lentilles non correctrices et la moyenne des valeurs obtenues a été calculée.

Les résultats obtenus sont rassemblés dans le tableau suivant :

| Matériau | Coupure UV | Indice de jaune (YI) |
|---|---|---|
| Orma® | 355 nm | 0,63 |
| Orma® + Seesorb 707 | 369 nm | 0,73 |
| Orma® + UV 24 | 395 nm | 3,35 |

Il ressort du tableau ci-dessus que seuls les substrats de lentille traités conformément à l'invention présentent simultanément une coupure UV supérieure ou égale à 365 nm et un indice de jaune YI inférieur ou égal à 1,5.

## Revendications

1. Procédé de fabrication d'une lentille ophtalmique comprenant un substrat organique transparent absorbant les ultra-violets, comprenant l'immersion du substrat organique dans un bain constitué d'une solution aqueuse renfermant du 2-(2-hydroxy-4-alkyloxyphenyl)-2H-benzotriazole, où le groupe alkyle est linéaire ou ramifié et renferme de 3 à 12 atomes de carbone.

2. Procédé selon la revendication 1, **caractérisé en ce que** le groupe alkyle est un groupe alkyle linéaire ou ramifié renfermant de 6 à 10 atomes de carbone, de préférence un groupe octyle.

3. Procédé selon l'une des revendications 1 et 2, **caractérisé en ce que** le substrat organique est un homopolymère ou un copolymère de diéthylène glycol bis(allylcarbonate).

4. Procédé selon l'une quelconque des revendications 1 à 3, **caractérisé en ce que** la durée d'immersion est comprise entre 30 minutes et 3h.

5. Procédé selon l'une quelconque des revendications 1 à 4, **caractérisé en ce que** la température du bain est comprise entre 80°C et 99°C, de préférence entre 90°C et 96°C.

6. Procédé selon l'une quelconque des revendications 1 à 5, **caractérisé en ce que** le bain contient en outre au moins un additif choisi dans le groupe constitué par : un agent dispersant, un colorant, un pigment, et leurs mélanges.

7. Procédé selon l'une quelconque des revendications 1 à 6, **caractérisé en ce que** la concentration de 2-(2-hydroxy-4-alkyloxyphenyl)-2H-benzotriazole est comprise entre 0,1 et 5% en poids, de préférence entre 0,5 et 1% en poids, par rapport au poids total du bain.

8. Utilisation d'un bain, constitué d'une solution aqueuse renfermant une quantité efficace de 2-(2-hydroxy-4-alkyloxyphenyl)-2H-benzotriazole, où le groupe alkyle est linéaire ou ramifié et renferme de 3 à 12 atomes de carbone, pour conférer à une lentille ophtalmique un seuil de coupure UV supérieur ou égale à 365 nm et un indice de jaune YI inférieur ou égal à 1,5 et de préférence inférieur à 1 voire inférieur à 0,8.

## Patentansprüche

1. Verfahren zur Herstellung einer ophthalmischen Linse, die ein transparentes, organisches, Ultraviolettstrahlung absorbierendes Substrat umfasst, umfassend das Eintauchen des organischen Substrats in ein Bad, bestehend aus einer wässrigen Lösung, die 2-(2-Hydroxy-4-alkyloxyphenyl)-2H-benzotriazol enthält, wobei die Alkylgruppe gerade oder verzweigt ist und 3 bis 12 Kohlenstoffatome enthält.

2. Verfahren nach Anspruch 1, **dadurch gekennzeichnet, dass** die Alkylgruppe eine gerade oder verzweigte Alkylgruppe mit 6 bis 10 Kohlenstoffatomen, vorzugsweise eine Octylgruppe ist.

3. Verfahren nach einem der Ansprüche 1 und 2, **dadurch gekennzeichnet, dass** das organische Substrat ein Homopolymer oder ein Copolymer von Diethylenglykolbis(allylcarbonat) ist.

4. Verfahren nach einem der Ansprüche 1 bis 3, **dadurch gekennzeichnet, dass** die Dauer des Eintauchens zwischen 30 Minuten und 3 Std. beträgt.

5. Verfahren nach einem der Ansprüche 1 bis 4, **dadurch gekennzeichnet, dass** die Temperatur des Bades zwischen 80°C und 99°C, vorzugsweise zwischen 90°C und 96°C liegt.

6. Verfahren nach einem der Ansprüche 1 bis 5, **dadurch gekennzeichnet, dass** das Bad außerdem mindestens ein Additiv enthält, das aus der Gruppe ausgewählt ist, bestehend aus: einem Dispergiermittel, einem Färbemittel, einem Pigment und deren Gemischen.

7. Verfahren nach einem der Ansprüche 1 bis 6, **dadurch gekennzeichnet, dass** die Konzentration von 2-(2-Hydroxy-4-alkyloxyphenyl)-2H-benzotriazol zwischen 0,1 und 5 Gew.-%, vorzugsweise zwischen 0,5 und 1 Gew.-%, bezogen auf das Gesamtgewicht des Bades, beträgt.

8. Verwendung eines Bades, bestehend aus einer wässrigen Lösung, die eine wirksame Menge an 2-(2-Hydroxy-4-alkyloxyphenyl)-2H-benzotriazol enthält, wobei die Alkylgruppe gerade oder verzweigt ist und 3 bis 12 Kohlenstoffatome enthält, um einer ophthalmischen Linse eine UV-Ausschlussgrenze von über oder gleich 365 nm und eine Vergilbungszahl V von kleiner als oder gleich 1,5 und vorzugsweise kleiner als 1 oder sogar kleiner als 0,8 zu verleihen.

## Claims

1. Process for the manufacture of an ophthalmic lens comprising a transparent organic substrate which absorbs ultraviolet radiation, comprising the dipping of the organic substrate in a bath consisting of an aqueous solution including 2-(2-hydroxy-4-alkyloxyphenyl)-2H-benzotriazole where the alkyl group is linear or branched and includes from 3 to 12 carbon atoms.

2. Process according to Claim 1, **characterized in that** the alkyl group is a linear or branched alkyl group including from 6 to 10 carbon atoms, preferably an octyl group.

3. Process according to either of Claims 1 and 2, **characterized in that** the organic substrate is a diethylene glycol bis(allyl carbonate) homopolymer or copolymer.

4. Process according to any one of Claims 1 to 3, **characterized in that** the duration of dipping is between 30 minutes and 3h.

5. Process according to any one of Claims 1 to 4, **characterized in that** the temperature of the bath is between 80°C and 99°C, preferably between 90°C and 96°C.

6. Process according to any one of Claims 1 to 5, **characterized in that** the bath additionally contains at least one additive chosen from the group consisting of: a dispersing agent, a dye, a pigment and their mixtures.

7. Process according to any one of Claims 1 to 6, **characterized in that** the concentration of 2-(2-hydroxy-4-alkyloxyphenyl)-2H-benzotriazole is between 0.1 and 5% by weight, preferably between 0.5 and 1% by weight, with respect to the total weight of the bath.

8. Use of a bath, consisting of an aqueous solution including an effective amount of 2-(2-hydroxy-4-alkyloxyphenyl)-2H-benzotriazole where the alkyl group is linear or branched and includes from 3 to 12 carbon atoms, in order to confer, on an ophthalmic lens, a UV cutoff threshold of greater than or equal to 365 nm and a yellowness index YI of less than or equal to 1.5 and preferably of less than 1, indeed even of less than 0.8.
